# EUROPEAN PATENT SPECIFICATION

(11) **EP 3 946 913 B1**
(45) Date of publication and mention of the grant of the patent: **25.10.2023**
(21) Application number: 19717658.9
(22) Date of filing: 29.03.2019
(51) Int. Cl.: B29D 30/00, B29D 30/54, C08J 7/12, B29C 45/14, B29K 609/00, B32B 7/10, B32B 25/04, B32B 25/12, B32B 25/14, B32B 25/16

(54) **BONDING RUBBER AND PLASTIC SURFACES DURING INJECTION MOLDING**
VERBINDEN EINER GUMMIOBERFLÄCHE UND EINER KUNSTSTOFFOBERFLÄCHE WÄHREND DES SPRITZGIESSENS
CONNECTION D'UNE SURFACE EN CAOUTCHOUC ET D'UNE SURFACE EN PLASTIQUE LORS D'UN MOULAGE PAR INJECTION

(43) Date of publication of application: 09.02.2022
(73) Proprietor: COMPAGNIE GENERALE DES ETABLISSEMENTS MICHELIN, 63000 Clermont-Ferrand (FR)
(72) Inventor: BOHN, Jr., Clayton, Greenville, South Carolina 29605 (US); KING, Patrick F., Greenville, South Carolina 29605 (US)
(74) Representative: Casalonga
(86) International application number: PCT/US2019/024978
(87) International publication number: WO 2020/204892

(56) References cited:
- EP-A1- 0 739 931
- EP-A1- 3 266 623
- EP-A2- 0 349 120
- US-A- 4 500 685
- US-A- 5 279 784
- US-A1- 2014 275 419
- US-A1- 2015 034 230

## Description

### BACKGROUND OF THE INVENTION

### Field of the Invention

This invention relates generally to methods for bonding rubber and plastic surfaces and articles made therefrom and more particularly to bonding such surfaces without requiring an adhesive.

### Description of the Related Art

Injection molding is a well-known method of fabrication for many useful articles. Often an article may be molded by injection molding and then additional steps are required for completing the article. For example a portion of an article may be molded and then the article is completed by using an adhesive to bond another portion of the article to it.

Useful materials for injection molding are thermoplastic materials. These materials are polymers that can be melted and reshaped by molding and then cooled in their final shape. They differ from thermoset materials which are cured materials that do not melt upon reheating for being reshaped. Within the definition of thermoplastic materials are thermoplastic elastomers that are polymeric materials that can be shaped or molded above their melt temperatures into fabricated articles and that possess elastomeric behavior without crosslinking - or curing - during fabrication. The process is reversible and the products can be remelted and remolded into a different fabricated article.

Of specific interest to certain manufactures are discovering ways of bonding a diene rubber fabrication to an injection-molded article during the injection molding process, *i.e*., bonding without later using an adhesive to bond the finished components together. For example, the European patent application No. 0 739 931 describes a process for over-molding a thermoplastic material chosen from polyurethanes and polyamide-based polymers onto a rubber. Said process comprises halogenating the surface of the rubber followed by over-molding of the thermoplastic material by compression or injection.

### SUMMARY OF THE INVENTION

The present invention relates to composites that have been formed by injection molding. The injection molded composite forms at least a part of a non-pneumatic tire, the non-pneumatic tire comprising a tire tread having the first bonding surface and a tread support having the second bonding surface. It comprises a first bonding surface of a diene rubber composition bonded to a second bonding surface of a polar thermoplastic elastomer composition. In such composite, there is no more than 25% of the bonding surfaces that have an adhesive applied to them and preferably, there may be no adhesive applied to the bonding surface. Furthermore, the polar thermoplastic elastomer composition was injected against the first bonding surface to form the second bonding surface and the first bonding surface has an active halogen moiety.

In particular embodiments the polar thermoplastic elastomer may be selected from a thermoplastic polyurethane, a styrene block copolymer, a thermoplastic polyacrylate, a thermoplastic copolyester, a thermoplastic polyether block amide or combinations thereof. In particular embodiments, the polar thermoplastic elastomer may be limited to just one of these materials or alternatively to just any particular two of any of them or just an particular three of any of them.

In particular embodiments, the bond strength between the bonded first and second surfaces provides cohesive rubber failure at greater than 25 °C, preferably at greater than 75 °C, wherein cohesive rubber failure results in at least 80% of the adhesive-free bonding surface area of the first bonding surface having rubber composition from the second bonding surface adhered to it.

In other embodiments, the bond strength between the bonded first and second surfaces provides cohesive thermoplastic elastomer composition failure at greater than 25 °C, preferably at greater than 75 °C, wherein cohesive thermoplastic elastomer failure results in at least 80% of the adhesive-free bonding surface area of the second bonding surface having thermoplastic elastomer composition from the first bonding surface adhered to it.

Methods for molding any of the inventive composites disclosed herein are described in the present specification. Such methods may include placing a rubber article formed from a diene rubber composition in an injection mold, wherein a bonding surface of the rubber article has an active halogen moiety and is exposed to the flow of a thermoplastic elastomer composition when injected into the mold and wherein no more than 25% of the bonding surface of the rubber article has an adhesive applied. Such methods may further include closing the mold, injecting the thermoplastic elastomer composition into the mold, filling the mold so that the thermoplastic elastomer composition presses against the bonding surface of the rubber article and removing the composite from the mold.

They may further include applying an adhesive to the bonding surface of the rubber article, wherein the adhesive covers no more than 25% of the bonding surface. Particular embodiments may include no more than 10% or no more than 5 % or 0% covered with the adhesive.

Particular embodiments may further include treating the rubber bonding surface with a halogen oxidizing agent. Optionally the method may include cleaning the rubber bonding surface with a solvent prior to the step of treating the rubber bonding surface with a halogen oxidizing agent.

The foregoing and other objects, features and advantages of the invention will be apparent from the following more detailed descriptions of particular embodiments of the invention, as illustrated in the accompanying drawing wherein like reference numbers represent like parts of the invention.

### BRIEF DESCRIPTION OF THE DRAWINGS

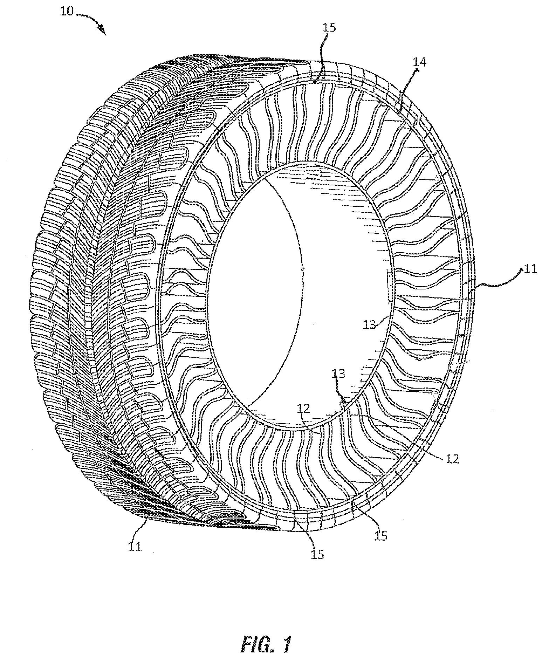

FIG. 1 is a perspective view of an injection-molded nonpneumatic tire having a rubber tread band bonded to a thermoplastic rim during the injection molding process.

### DETAILED DESCRIPTION OF PARTICULAR EMBODIMENTS

The present invention includes composites that have been formed by injection molding. Said composites form at least a part of a non-pneumatic tire, the non-pneumatic tire comprising a tire tread having the first bonding surface and a tread support having the second bonding surface. The composites may be formed, for example, by placing a diene rubber article into a mold for injection molding and then injecting a polar thermoplastic elastomer composition into the mold. Surprisingly, when the molded object is removed from the mold, the rubber and the thermoplastic elastomer composition have bonded at their interface without the need to include any or no more than a very little amount of adhesive between the two surfaces. Indeed, in particular embodiments there is no adhesive used between the two surfaces. It has been found that the bonding of the diene rubber surface to the surface of the polar thermoplastic elastomer composition is successful in particular embodiments when the rubber surface is halogen oxidized, e.g., the surface has been treated with a halogen oxidizing agent or otherwise has an active halogen moiety.

In particular embodiments, a rubber tread is bonded to a tread support for a nonpneumatic tire or similar article, such as a caster. In such embodiments, the tread support ring is formed by injecting a suitable polar thermoplastic elastomer composition into an injection mold that contains the rubber tread having a bonding surface with an active halogen moiety. When removed from the mold, the tread is bonded to the tread support.

Reference will now be made in detail to embodiments of the invention, one or more examples of which are illustrated in the drawings. Each example is provided by way of explanation of the invention. For example, features illustrated or described as part of one embodiment can be used with another embodiment to yield still a third embodiment. It is intended that the present invention include these and other modifications and variations.

The injection molded composites that are disclosed herein include a first bonding surface of a diene rubber composition bonded to a second bonding surface of a polar thermoplastic elastomer composition. To form the composite, a rubber article is placed into a mold suitable for injection molding and after the mold is closed, the polar thermoplastic elastomer composition is injected into the mold using an injection molding process. The surface of the rubber article that is exposed to the injected thermoplastic elastomer composition is the bonding surface of the rubber composition. As the thermoplastic elastomer composition is pushed against the exposed rubber surface during the injection molding process, it forms the bonding surface of the polar thermoplastic elastomer composition so that the bonding surface of the rubber composition can be bonded to the newly formed bonding surface of the polar thermoplastic elastomer composition.

Diene rubber compositions are well-known in the art and comprise a mixture of diene rubbers with other components that may include, for example, reinforcing fillers, resins, oils, antidegradants, curing accelerators and curing agents. These rubber compositions can be formed in known ways into useful articles, e.g., such as tire treads.

Diene rubbers that are useful for such rubber compositions are understood to be those rubbers resulting at least in part, *i.e.,* a homopolymer or a copolymer, from diene monomers, *i.e.,* monomers having two double carbon-carbon bonds, whether conjugated or not. These diene rubbers may be classified as either "essentially unsaturated" diene rubbers or "essentially saturated" diene rubbers. As used herein, essentially unsaturated diene rubbers are diene rubbers resulting at least in part from conjugated diene monomers, the essentially unsaturated diene rubbers having a content of such members or units of diene origin (conjugated dienes) that is at least 15 mol. %. Within the category of essentially unsaturated diene rubbers are highly unsaturated diene rubbers, which are diene rubbers having a content of units of diene origin (conjugated diene) that is greater than 50 mol. %. Natural rubber is a highly unsaturated diene rubber.

Those diene rubbers that do not fall into the definition of being essentially unsaturated are, therefore, the essentially saturated diene rubbers. Such rubbers include, for example, butyl rubbers and copolymers of dienes and of alpha-olefins of the EPDM type. These diene rubbers have low or very low content of units of diene origin (conjugated dienes), such content being less than 15 mol. %. Particular embodiments of the injection molded composites disclosed herein may be limited to rubber compositions that are only highly unsaturated diene rubbers.

Examples of suitable conjugated dienes include, in particular, 1,3-butadiene, 2-methyl-1,3-butadiene, 2,3-di(C₁-C₅ alkyl)-1,3-butadienes such as, 2,3-dimethyl-1,3-butadiene, 2,3-diethyl-1,3-butadiene, 2-methyl-3-ethyl-1,3-butadiene, 2-methyl-3-isopropyl-1,3-butadiene, an aryl-1,3-butadiene, 1,3-pentadiene and 2,4-hexadiene. Examples of vinylaromatic compounds include styrene, ortho-, meta- and para-methylstyrene, the commercial mixture "vinyltoluene", para-tert-butylstyrene, methoxystyrenes, chloro-styrenes, vinylmesitylene, divinylbenzene and vinylnaphthalene.

Suitable diene rubbers for particular embodiments of the present invention include highly unsaturated diene rubbers such as, for example, polybutadienes (BR), polyisoprenes (IR), natural rubber (NR), butadiene copolymers, isoprene copolymers and mixtures of these rubbers. Such copolymers include, for example, butadiene/styrene copolymers (SBR), isoprene/butadiene copolymers (BIR), isoprene/styrene copolymers (SIR) and isoprene/butadiene/styrene copolymers (SBIR). Other highly unsaturated diene elastomers that further include an active halogen moiety are, for example, polychloroprene, or PC-rubber.

Particular embodiments of the present invention may contain only one diene rubber and/or a mixture of several diene rubbers. Some embodiments may be limited only to one or more highly unsaturated diene rubber. Some embodiments may be limited to those that include at least 80 phr of highly unsaturated diene rubbers or alternatively at least 90 phr or at least 95 phr of such rubber. In particular embodiments, one or more of the diene rubbers may be functionalized; *i.e.,* appended with active moieties that can, for example, interact with the reinforcement fillers such as carbon black and silica. Such functionalized rubbers are well known in the industry and include, for example, silanol, aminoalkoxysilane, epoxy, hydroxyl and carboxyl functional groups.

The rubber compositions may, in addition to the diene elastomer, include reinforcing fillers such as carbon black and/or silica, plasticizing oils, plasticizing resins, curing accelerators and curing agents (such as sulfur) as well as antidegradants, fatty acids, waxes, stearic acid, foaming agents and so forth. All of these components are well-known in the art of formulating rubber compositions and the useful rubber compositions are not particularly limited. In particular embodiments, the rubber articles having the bonding surface are first cured, e.g., vulcanized, in known manner before being placed in the injection mold.

The bonding surface of the rubber composition contains active halogen moieties to help provide adequate bonding between the bonding surface of the rubber composition and the bonding surface of the polar thermoplastic elastomer composition. Particular embodiments include oxidizing the bonding surface of the rubber composition with a halogen oxidizing agent to provide a halogen oxidized surface, *i.e.,* a surface having active halogen moieties. Particular embodiments provide that the halogen oxidizing agent is a Cl-containing oxidizing agent and may further provide that no other halogen oxidizing agent may be used. Other embodiments provide that the halogen oxidizing agent is a Br-containing oxidizing agent and may further provide that no other halogen oxidizing agent may be used. The oxidizing agents may include mixtures of one or more halogen oxidizing agents, e.g., mixture of a C1-containing and a Br-containing oxidizing agent or a mixture of any two or more halogen oxidizing agents.

To determine whether there are any active halogen moieties on the rubber bonding surface, a sample of the rubber may be analyzed according to Fourier-transform infrared spectroscopy (FTIR). In particular embodiments the bonding surface rubber composition may exhibit one or more FTIR absorbance peaks that are indicative of a halogen moiety such as, for example, a C-Cl bond will provide a peak at around 800-600 cm⁻¹, a C-Br bond at around 750-500 cm⁻¹, a C-I bond at around 500 cm⁻¹, and a C-F bond at around 1400-1000 cm⁻¹.

While there are many halogen oxidizing agents that are well known, including for example sodium hypochlorite (household bleach), one useful product is CHEMLOK 7701, a product provided by Lord Corporation having trichloroisocyanuric acid as its active ingredient. Brushing this exemplary product onto the rubber composition bonding surface provides the halogen oxidized surface. Other useful oxidizing agents include, for example, dichloroisocyanuric acid, tribromoisocyanuric acid, and dibromo-isocyanuric acid and their salts in aqueous solutions. Of course if the rubber composition already includes halogen moieties on the surface, *e.g.,* polychloroprene rubber, then treatment with a halogen oxidizing agent is not necessary.

Polar thermoplastic elastomers suitable for injection molding are also well known in the industry. Thermoplastic elastomers are generally defined as being polymeric materials that exhibit elastomeric behavior (*i.e.,* both viscosity and elasticity) and that can be shaped into a fabricated article at a temperature above its melt temperature and then later can be reprocessed and remolded by heating the material again to a temperature above its melt temperature. In contrast, a thermosetting material is one that is set in a permanent solid state, having formed irreversible cross-linking bonds so that it cannot later be reprocessed and remolded. Typically an elastomer, for example, can be stretched to moderate elongations and, upon the removal of the stress, return to something close to its original shape.

Thermoplastic elastomers are typically copolymers of two or more monomer types to form a polymer with hard segments that provide the thermally stable or plastic characteristics alternated with soft segments that provide the elastomeric or rubbery characteristics. Examples of polar thermoplastic elastomers include thermoplastic polyurethane, thermoplastic polyamides, thermoplastic copolyester, thermoplastic polyether block amide, and thermoplastic styrenic block copolymers. Examples of non-polar thermoplastic elastomers typically include polyolefin blends (TPO), polyolefin alloys (TPV), polyolefin plastomers (POP), polyolefin elastomers (POE) with no polar moiety attached. Polar thermoplastic elastomers typically have a polar moiety attached such as, for example, an amino, a hydroxyl, a carboxy, or an amide moiety. That is because nitrogen and oxygen have a higher electronegativity than carbon and hydrogen, *i.e.,* 3.0 and 3.5 versus 2.5 and 2.1 respectively (Pauling scale).

Means for identifying whether a polymer is polar are well known by those skilled in the art. Generally polarity is determined by the bond polarity between particular atoms, the arrangement of outside atoms around a central atom and the shape of the molecule. When there is even distribution of the electrons around the molecule, then it is nonpolar but when there is uneven distribution of the electrons, then one side is more positively charged than the other side and the molecule is polar.

Atoms with higher electronegativity attract electrons more strongly than those with lower electronegativity. For a particular molecule, or a portion of a large molecule, each bond between a central atom and those connected to it is considered, with the difference in the electronegativity on the Pauling scale of each of the atoms in the bond determining whether the bond is polar. If the difference is greater than zero, the bond is polar. If there are no polar bonds, then the molecule is nonpolar.

As known to those skilled in the art, if there are polar bonds then symmetry is a further consideration as to whether the molecule is polar. For example, if the arrangement is nonsymmetrical, *e.g.,* bent or pyramidal, then the atoms are not symmetrically distributed around the central atom. If the polar bonds are not symmetrically distributed, then the molecule is polar. Alternatively, if the arrangement is symmetrical, *e.g.,* trigonal planar, tetrahedral, or linear triatomic, then the atoms are symmetrically distributed around the central atom. If the atoms are symmetrically distributed and all the outside atoms are the same, then the molecule is nonpolar because the bond polarities cancel each other. However, if the atoms are symmetrically distributed and at least some the outside atoms are different, then the molecule is polar because the bond polarities don't cancel each other out.

As noted above, one well-known polar thermoplastic elastomer is thermoplastic polyurethanes. Thermoplastic polyurethane chemistry makes use of the reaction of an isocyanate (-N=C=O) with an active hydrogen component, *e.g.,* (R-OH) or (R-NH₂) such as polyols or polyamines. As is known in the art, thermoplastic polyurethane is typically the result of reacting a polyol or a polyamine and with a di- or tri-isocyanate and a chain extender. Strictly speaking the reaction of a polyamine - as opposed to a polyol - with an isocyanate is in the family of the polyuria systems.

The world of thermoplastic polyurethanes is vast, including many more examples than provided herein. However, useful materials for thermoplastic polyurethanes may include, for example, polyether polyols, amine-terminated polyethers, polyester polyols, polyester ether polyols, and castor oil polyols. Polyether polyols include polytetramethylene ether glycol (PTMEG), polypropylene oxide glycol (PPO) and polybutylene oxide glycol (PBO). Amine-terminated polyols are based on polyether glycols that have had the terminal hydroxyl groups replaced by primary or secondary amino functionalities.

Examples of isocyanates that are useful for reacting with the polyols and/or polyamines include, for example, both aromatic and aliphatic diisocyanates such as 4,4'-methylene diphenyl diisocyanate (MD1), toluene diisocyanate (TDI), meta-xylene diisocyanate (MPDI), p-phenylene diisocyanate (PPDI), 1,6-hexamethylene diisocyanate (HDI) and isophorone diisocyanate, (IPDI).

Examples of useful chain extenders include diols and diamines such as 1,4-butandiol, 1,6-hexane diol, and 1,2-propane diamine.

Examples of commercially available polar thermoplastic polyurethanes include ELASTOLLAN 1195A, 1198A and 1190A marketed by BASF; ULTRALAST 900 marketed by Lanxess; and ESTANE ETE 50 marketed by Lubrizol.

Another well-known thermoplastic elastomer is copolyesters. Polyesters are the result of a combination of diacids and diols. Thermoplastic copolyesters are block copolymers typically comprised of ester based hard segments (such as polybutylene terephthalate) and ether and/or ester based soft segments (such polytetramethylene ether glycol). These copolymers are typically formed by a polycondensation reaction of a carboxylic acid terminated polyester, such as the one formed from the reaction of terephthalic acid with 1,4 butanediol, or with hydroxyl terminated polyether polyols.

Examples of commercially available polar thermoplastic copolyesters include FN006 marketed by Eastman Chemical; EM460, EL550, PL420 and PL461 marketed by DSM Engineering Plastics; and TPEE-700H marketed by Audia Washington Penn Plastic.

Another useful thermoplastic elastomer is polyether block amides. Thermoplastic polyether block amides are block copolymers typically comprised of polyamide based hard segments (such as polyamide 6, polyamide 11 or polyamide 12) and ether and/or ester based soft segments (such polytetramethylene ether glycol). These copolymers are typically formed by a polycondensation reaction of a carboxylic acid terminated polyamide, dicarboxylic acid-terminated Polyamide 12, with hydroxyl terminated polyether polyols

Examples of commercially available polar thermoplastic polyether block amide include PEBAX marketed by Arkema and VESTAMID E marketed by Evonik.

Yet another example of a useful thermoplastic elastomer is styrenic block copolymers. Styrenic block copolymers are block copolymers typically comprised of styrene based hard segments and dienic or hydrogenated soft segments (such as butadiene and isoprene or ethylene/butylene and ethylene/propylene for the hydrogenated versions). These copolymers are typically formed by a ionic copolymerization of styrene with an elastomeric co-monomer such as butadiene for styrene-butadiene-styrene (SBS) or 2-methyl-1,3-butadiene for styrene-isoprene-styrene (SIS).

Examples of commercially available polar thermoplastic styrenic block copolymers include SBS rubbers manufactured by Firestone, Goodyear and Lanxess. SIS materials are available from Zeon, Kraton and JSR. Kraton provides SBS, SIS, SEBS and SEPS materials.

Thermoplastic elastomer compositions include, in addition to the thermoplastic elastomer component, other components such as colorants, catalysts, antidegradants, thermal stabilizers, antistatic agents, antioxidants and so forth. Such additives may be added to the thermoplastic composition as required for the particular service or use and the particular thermoplastic component as determined by those skilled in the art.

As noted above, it is a surprising result that the polar thermoplastic elastomer bonds to the bonding surface of the rubber composition without the use of any adhesive between the rubber bonding surface and the polar thermoplastic elastomer bonding surface. In the past, it was thought that an adhesive was required and adhesives such as polyurethane adhesives have been used. In particular embodiments of the injection molded composites disclosed herein, the use of adhesives is very limited. In particular embodiments the bonding surfaces have no more than 25% of the bonding surfaces having an adhesive therebetween or alternatively no more than 15%, no more than 10%, no more than 5%, or 0%. For example, if the bonding surface of the rubber composition had a surface area of 100 cm², then 10% of that bonding surface, *i.e.,* 10 cm², would be covered with adhesive for there to be 10% of the bonding surfaces to have an adhesive therebetween.

Typically it has been found that the bond strength at the interface between the bonding surfaces of the rubber composition and the polar thermoplastic elastomer composition is better at lower temperatures than at higher temperatures. Therefore the testing for bond strength should be conducted at different temperatures to determine that the bond strength is adequate for the expected service environment for the injection molded composite.

In particular embodiments, a sufficient bond is provided when the bond test results in cohesive failure of the rubber composition. Cohesive failure of the rubber means that when the composite is pulled apart, the rubber composition itself cohesively failed, which is indicated by having rubber adhered to the bonding surface of the polar thermoplastic elastomer composition. Such bond failure is indicated when at least 80% of the adhesive-free bond surface area of the polar thermoplastic elastomer composition, not having adhesive applied, has rubber adhered to it when inspected after the bond test is completed or alternatively when 90%, 95%, 98% or 100% of the adhesive-free bond surface area has rubber adhered to it. In other embodiments having composites without the requirement of such high bond strength, lesser bond strengths would be acceptable even to the level of having the failure at the interface with no cohesive rubber failure. In other embodiments, if the thermoplastic elastomer is softer than the rubber, then a sufficient bond is provided when the bond test results in cohesive failure of the thermoplastic elastomer composition, which can be determined in the same manner as for the rubber cohesive failure, *i.e.,* the percent of the adhesive-free bond surface of the rubber bonding surface having the thermoplastic elastomer adhered to it. Therefore such bond failure is indicated when at least 80% of the adhesive-free bond surface area of the rubber composition, not having adhesive applied, has the thermoplastic elastomer composition adhered to it when inspected after the bond test is completed or alternatively when 90%, 95%, 98% or 100% of the adhesive-free bond surface area has the thermoplastic elastomer composition adhered to it.

In particular embodiments, the bond strength between the bonded surfaces provides cohesive failure of either the rubber composition, the thermoplastic elastomer composition or both such that at least 80% of the adhesive-free bonding surface area, or alternatively at least 90%, 95%, 98% or 100% of the adhesive-free bonding surface area has the rubber composition, the thermoplastic elastomer composition or both adhered to it from cohesive failure of the adhered material.

Since the bond test is meant only to apply to the bond formed between the rubber and the thermoplastic elastomer, any bond surface area that was first covered with adhesive is not subject to being tested by the described bond test. Therefore, for example, if 10% of the tread bond surface was covered with an adhesive, then the adhesive-free bond surface area would be 90% of the total bond surface area and at least 80% of this adhesive-free bond surface area would, when having rubber adhered to it after the bond test, support a finding of a rubber cohesion bond failure.

The bond test is conducted by recording the temperature of the composite at the interface and pulling the rubber composition (or the thermoplastic elastomer composition) away from the thermoplastic elastomer composition base (or the rubber composition base). To conduct the test, a sample of a composite formed during injection molding and having 1) the elastomer thermoplastic composition base, 2) the rubber composition bonded to it, and 3) preferably at least 2 in² of bonded interface, is heated in an oven to the desired temperature at which the bond strength is to be tested. If testing is only desired at room temperature, then no heating is necessary. If bond strengths at temperatures below room temperature are required, then the sample may be cooled to the desired temperature for testing. After securing the base, the rubber section is pulled until it peels away from the base. Alternatively, the rubber section may be secured and the base pulled until it peels away from the rubber.

If the failure was by rubber cohesion, then the base will have rubber adhered to it. If the failure was by thermoplastic elastomer composition cohesion, then the rubber base will have thermoplastic elastomer composition adhered to it. Then the surface area of the bonding area of the base that is covered with rubber (or alternatively with thermoplastic elastomer) is divided by the total adhesive-free surface area of the bonding area of the base. That ratio, multiplied by 100, provides the percent of the bond surface area that has rubber (or thermoplastic elastomer) bonded to it.

As noted above, if the composite included an amount of adhesive applied to the rubber composition bonding surface prior to the injection molding process, then the surface area of the bonding base would not include that portion covered with adhesive.

FIG. **1** is a perspective view of an injection-molded nonpneumatic tire having a rubber tread band bonded to a thermoplastic rim during the injection molding process. The nonpneumatic tire **10** includes a tread band **11** that is bonded to the tread support ring **15.** The hub support ring **13** is later bonded or otherwise attached to a hub that can be used to mount the tire onto a vehicle. The nonpneumatic tire may be manufactured through an injection molding process. In particular embodiments for manufacturing an injection molded composite, a rubber article that is made from a diene rubber composition is placed in an injection mold having its bonding surface exposed to the flow of a thermoplastic elastomer composition. The mold is then closed and prepared for having the thermoplastic elastomer composition pressured into the mold. The mold is filled with the liquid thermoplastic elastomer that pushes up against the exposed bonding surface of the rubber article, thereby forming the bonding surface of the polar thermoplastic elastomer composition. The injection molded composite is removed from the injection mold with the composite having the bonding surface of the rubber article bonded to the bonding surface of the thermoplastic elastomer composition.

In particular embodiments of such methods, there is no adhesive between the bonding surface of the rubber composition and the bonding surface of the thermoplastic elastomer composition. Alternatively, in particular embodiments such methods may include applying an adhesive on the bonding surface of the diene rubber composition. The adhesive may be applied to no more than 25% of the bonding surface or alternatively no more than 15%, no more than 10%, or no more than 5%.

In particular embodiments, the article placed into the injection mold has a bonding surface having an active halogen moiety, which may include, for example, having a surface that was halogen oxidized. To achieve this condition, particular embodiments may further include treating the bonding surface with a halogen oxidizing agent. Such treatment may include, for example, brushing or spraying the halogen oxidizing agent onto the bonding surface. Examples of such materials are disclosed above.

Returning the FIG. **1****,** the tread **11** is made of a diene rubber composition and the underside of the tread (not visible) is the tread bonding surface that is bonded to the tread support ring **15** that was formed during an injection molding process as described above. The bonding takes place at the interface **14** between the underside of the tread **11** and the bonding surface of the tread support ring **15.** The bonding surface of the tread support ring **15** was formed during the injection molding process when the liquid thermoplastic elastomer was injected into the mold and pushed against the bonding surface on the underside of the tread **11.** In particular embodiments, the underside of the tread may have been treated with a halogen oxidizing agent as described above.

The invention is further illustrated by the following examples, which are to be regarded only as illustrations and not delimitative of the invention in any way.

### Example 1

This example illustrates the method for manufacturing a nonpneumatic tire having a similar (but not identical) construction to the tire shown in FIG. 1 and having a rubber tread bonded to a tread support ring during an injection molding process as described above. There was no adhesive applied to the tread base bonding surface. The tire was a 24x12x12 inch ZTR model TWEEL tire which is marketed as a Michelin X TWEEL TURF tire.

The polar thermoplastic elastomer was ELASTTOLLAN 1198A, a thermoplastic polyurethane available from BASF. The tread bonding surface was made from a diene rubber composition that included 100 phr of natural rubber as the rubber component as well as carbon black and other components that are well known to those skilled in the art. It was cured before being placed in the mold and was treated with CHEMLOK 7701 by brushing the material onto the tread underside after the underside of the tread was first cleaned by wiping the surface with a rag wetted with acetone. After the CHEMLOCK 7701 was dried, the surface was wiped with a rag wetted with a 50-50 vol% water-acetone mixture.

The rubber tread ring was placed into an injection mold with the underside of the tread exposed to the flow of the injected TPU material. After the mold was closed, the TPU composition was injected into the mold. After cooling for a few minutes, the mold was opened and the tire removed with the tread ring bonded to the molded tread support ring of the nonpneumatic tire.

To test the bond strength, the spokes and hub were removed (See FIG. 1) and the composite of the tread support ring and tread was placed in an oven at 120 °C for four hours. After removing the composite from the oven, the support ring was cut with two slits, each slit running from the front to the back of the ring, *i.e.,* in the tire-width direction, and spaced about 1-inch apart from one another, creating a sample that could be measured for bond strength. Using a pair of vise-grip plyers, one end of the plastic strip was gripped and the plastic was pulled back from the rubber along the width of the tire for one or two inches. If the peel was easy due to no bonding, then the composite was allowed to cool for several minutes and attempted again. The plastic strip was pulled back another one or two inches and the amount of rubber pulled was determined as a percentage of the bonding area of the sample. The temperature of the bonding area was measured and recorded.

The result of this test provided 100% bonding surface area having rubber adhered to it at 80 °C.

### Example 2

Using the same procedure as described in Example **1,** a 13x6.5R6 inch TWEEL caster was made by injection molding. The only differences between Example **1** and this Example **2** was that the polar thermoplastic elastomer used to make the composition forming the tire support structure was the copolyester ANITEL EM460 marketed by DSM, the bonding surface of the tread was of a rubber composition having 35 phr of polybutadiene rubber and 65 phr of styrene butadiene rubber and the tire product/size that was made.

The result of the bonding test of this material was 100% bonding surface area having rubber adhered to it at 98 °C.

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b."

## Claims

1. An injection molded composite, comprising:
a first bonding surface of a diene rubber composition bonded to a second bonding surface of a polar thermoplastic elastomer composition, wherein no more than 25% of the bonding surfaces have an adhesive therebetween, wherein the polar thermoplastic elastomer composition was injected against the first bonding surface to form the second bonding surface and wherein the first bonding surface has an active halogen moiety;
**characterized in that** the injection molded composite forms at least a part of a non-pneumatic tire, the non-pneumatic tire comprising a tire tread having the first bonding surface and a tread support having the second bonding surface.

2. The injection molded composite of claim 1, wherein the first bonding surface was halogen oxidized.

3. The injection molded composite of claim 1 or 2, wherein the bonding surfaces have no adhesive therebetween.

4. The injection molded composite of any of the preceding claims, wherein the first bonding surface comprises a cured rubber composition comprising at least 70 phr of a highly unsaturated diene rubber.

5. The injection molded composite of claim 4, wherein the highly unsaturated diene rubber is selected from a styrene butadiene rubber, a polybutadiene rubber, a natural rubber, a synthetic polyisoprene rubber or combinations thereof.

6. The injection molded composite of any of the preceding claims, wherein the rubber composition comprises 100 phr of the highly unsaturated diene rubber.

7. The injection molded composite of any of the preceding claims, wherein the rubber composition is a cured rubber composition.

8. The injection molded composite of any of the preceding claims, wherein the polar thermoplastic elastomer composition comprises a polar thermoplastic elastomer selected from a thermoplastic polyurethane, a styrene block copolymer, a thermoplastic polyacrylate, a thermoplastic copolyester, a thermoplastic polyether block amide or combinations thereof.

9. The injection molded composite of any of the preceding claims, wherein the polar thermoplastic elastomer bonding surface is a thermoplastic polyurethane.

10. The injection molded composite of any of the preceding claims, wherein the first bonding surface is treated with a halogen oxidizing agent.

11. The injection molded composite of claim 10, wherein the halogen oxidizing agent is a Cl-containing oxidizing agent.

12. The injection molded composite of claim 10, wherein the Cl-containing oxidizing agent is a trichloroisocyanuric acid.

13. The injection molded composite of any of the preceding claims, wherein a first bond strength between the bonded first and second surfaces provides cohesive rubber failure at greater than 25 °C, wherein cohesive rubber failure results in at least 80% of the adhesive-free bonding surface area of the first bonding surface having rubber composition from the second bonding surface adhered to it.

14. The injection molded composite of claim 13, wherein the first bond strength between the bonded first and second surfaces provides the cohesive rubber failure at greater than 75 °C.

15. The injection molded composite of any of the preceding claims, wherein a second bond strength between the bonded first and second surfaces provides cohesive thermoplastic elastomer composition failure at greater than 25 °C, wherein cohesive thermoplastic elastomer failure results in at least 80% of the adhesive-free bonding surface area of the second bonding surface having thermoplastic elastomer composition from the first bonding surface adhered to it.

16. The injection molded composite of claim 15, wherein the second bond strength between the first and second surfaces provides the cohesive thermoplastic elastomer composition failure at greater than 75 °C.

## Patentansprüche

1. Spritzgegossener Verbundstoff, umfassend:
eine erste Klebefläche aus einer Dienkautschukzusammensetzung, die mit einer zweiten Klebefläche aus einer polaren thermoplastischen Elastomerzusammensetzung verklebt ist, wobei nicht mehr als 25% der Klebeflächen dazwischen einen Klebstoff aufweisen, wobei die polare thermoplastische Elastomerzusammensetzung gegen die erste Klebefläche eingespritzt wurde, um die zweite Klebefläche zu bilden, und wobei die erste Klebefläche eine aktive Halogengruppe aufweist;
**dadurch gekennzeichnet, dass** der spritzgegossene Verbundstoff wenigstens Teil eines nicht-pneumatischen Reifens ist, wobei der nicht-pneumatische Reifen eine Reifenlauffläche mit der ersten Klebefläche und einen Laufflächenträger mit der zweiten Klebefläche umfasst.

2. Spritzgegossener Verbundstoff nach Anspruch 1, wobei die erste Klebefläche halogenoxidiert war.

3. Spritzgegossener Verbundstoff nach Anspruch 1 oder 2, wobei die Klebeflächen keinen Klebstoff dazwischen aufweisen.

4. Spritzgegossener Verbundstoff nach einem der vorhergehenden Ansprüche, wobei die erste Klebefläche eine gehärtete Kautschukzusammensetzung umfasst, die mindestens 70 phr eines hoch ungesättigten Dienkautschuks umfasst.

5. Spritzgegossener Verbundstoff nach Anspruch 4, wobei der hoch ungesättigte Dienkautschuk aus einem Styrol-Butadien-Kautschuk, einem Polybutadienkautschuk, einem Naturkautschuk, einem synthetischen Polyisoprenkautschuk oder Kombinationen davon ausgewählt ist.

6. Spritzgegossener Verbundstoff nach einem der vorhergehenden Ansprüche, wobei die Kautschukzusammensetzung 100 phr des hoch ungesättigten Dienkautschuks umfasst.

7. Spritzgegossener Verbundstoff nach einem der vorhergehenden Ansprüche, wobei die Kautschukzusammensetzung eine gehärte Kautschukzusammensetzung ist.

8. Spritzgegossener Verbundstoff nach einem der vorhergehenden Ansprüche, wobei die polare thermoplastische Elastomerzusammensetzung ein polares thermoplastisches Elastomer umfasst, das aus einem thermoplastischen Polyurethan, einem Styrol-Blockcopolymer, einem thermoplastischen Polyacrylat, einem thermoplastischen Copolyester, einem thermoplastischen Polyetherblockamid oder Kombinationen davon ausgewählt ist.

9. Spritzgegossener Verbundstoff nach einem der vorhergehenden Ansprüche, wobei die Klebefläche aus polarem thermoplastischem Elastomer ein thermoplastisches Polyurethan ist.

10. Spritzgegossener Verbundstoff nach einem der vorhergehenden Ansprüche, wobei die erste Klebefläche mit einem Halogenoxidationsmittel behandelt ist.

11. Spritzgegossener Verbundstoff nach Anspruch 10, wobei das Halogenoxidationsmittel ein Cl enthaltendes Oxidationsmittel ist.

12. Spritzgegossener Verbundstoff nach Anspruch 10, wobei das Cl enthaltende Oxidationsmittel eine Trichlorisocyanursäure ist.

13. Spritzgegossener Verbundstoff nach einem der vorhergehenden Ansprüche, wobei eine erste Haftfestigkeit zwischen den verklebten ersten und zweiten Flächen bei mehr als 25 °C für Kohäsionsbruch des Kautschuks sorgt, wobei der Kohäsionsbruch des Kautschuks dazu führt, dass an mindestens 80% des klebstofffreien Klebeflächenbereichs der ersten Klebefläche Kautschukzusammensetzung von der zweiten Klebefläche klebt.

14. Spritzgegossener Verbundstoff nach Anspruch 13, wobei die erste Haftfestigkeit zwischen den verklebten ersten und zweiten Flächen bei mehr als 75 °C für den Kohäsionsbruch des Kautschuks sorgt.

15. Spritzgegossener Verbundstoff nach einem der vorhergehenden Ansprüche, wobei eine zweite Haftfestigkeit zwischen den verklebten ersten und zweiten Flächen bei mehr als 25 °C für Kohäsionsbruch der thermoplastischen Elastomerzusammensetzung sorgt, wobei der Kohäsionsbruch des thermoplastischen Elastomers dazu führt, dass an mindestens 80% des klebstofffreien Klebeflächenbereichs der zweiten Klebefläche thermoplastische Elastomerzusammensetzung von der ersten Klebefläche klebt.

16. Spritzgegossener Verbundstoff nach Anspruch 15, wobei die zweite Haftfestigkeit zwischen den ersten und zweiten Flächen bei mehr als 75 °C für den Kohäsionsbruch der thermoplastischen Elastomerzusammensetzung sorgt.

## Revendications

1. Composite moulé par injection, comprenant :
une première surface de liaison d'une composition de caoutchouc diénique liée à une deuxième surface de liaison d'une composition élastomère thermoplastique polaire, dans lequel pas plus de 25 % des surfaces de liaison possèdent un adhésif entre elles, dans lequel la composition élastomère thermoplastique polaire a été injectée contre la première surface de liaison pour former la deuxième surface de liaison et dans lequel la première surface de liaison possède une fraction halogène active ;
**caractérisé en ce que** le composite moulé par injection forme au moins une partie d'un pneu non pneumatique, le pneu non pneumatique comprenant une bande de roulement de pneu ayant la première surface de liaison et un support de bande de roulement ayant la deuxième surface de liaison.

2. Composite moulé par injection selon la revendication 1, dans lequel la première surface de liaison a été oxydée par halogène.

3. Composite moulé par injection selon la revendication 1 ou 2, dans lequel les surfaces de liaison ne possèdent pas d'adhésif entre elles.

4. Composite moulé par injection selon l'une quelconque des revendications précédentes, dans lequel la première surface de liaison comprend une composition de caoutchouc durcie comprenant au moins 70 parties par cent de caoutchouc, phr, d'un caoutchouc diénique hautement insaturé.

5. Composite moulé par injection selon la revendication 4, dans lequel le caoutchouc diénique hautement insaturé est sélectionné parmi un caoutchouc styrène-butadiène, un caoutchouc polybutadiène, un caoutchouc naturel, un caoutchouc polyisoprène synthétique ou les combinaisons de ceux-ci.

6. Composite moulé par injection selon l'une quelconque des revendications précédentes, dans lequel la composition de caoutchouc comprend 100 phr du caoutchouc diénique hautement insaturé.

7. Composite moulé par injection selon l'une quelconque des revendications précédentes, dans lequel la composition de caoutchouc est une composition de caoutchouc durcie.

8. Composite moulé par injection selon l'une quelconque des revendications précédentes, dans lequel la composition élastomère thermoplastique polaire comprend un élastomère thermoplastique polaire sélectionné parmi un polyuréthane thermoplastique, un copolymère bloc de styrène, un polyacrylate thermoplastique, un copolyester thermoplastique, un amide bloc polyéther thermoplastique ou les combinaisons de ceux-ci.

9. Composite moulé par injection selon l'une quelconque des revendications précédentes, dans lequel la surface de liaison élastomère thermoplastique polaire est un polyuréthane thermoplastique.

10. Composite moulé par injection selon l'une quelconque des revendications précédentes, dans lequel la première surface de liaison est traitée avec un agent oxydant halogène.

11. Composite moulé par injection selon la revendication 10, dans lequel l'agent oxydant halogène est un agent oxydant contenant du Cl.

12. Composite moulé par injection selon la revendication 10, dans lequel l'agent oxydant contenant du Cl est un acide trichloroisocyanurique.

13. Composite moulé par injection selon l'une quelconque des revendications précédentes, dans lequel une première force de liaison entre les première et deuxième surfaces liées fournit une rupture cohésive de caoutchouc à plus de 25 °C, dans lequel une rupture cohésive de caoutchouc résulte en ce qu'au moins 80 % de l'aire de surface de liaison sans adhésif de la première surface de liaison possède une composition de caoutchouc provenant de la deuxième surface de liaison adhérant à celle-ci.

14. Composite moulé par injection selon la revendication 13, dans lequel la première force de liaison entre les première et deuxième surfaces liées fournit une rupture cohésive de caoutchouc à plus de 75 °C.

15. Composite moulé par injection selon l'une quelconque des revendications précédentes, dans lequel une deuxième force de liaison entre les première et deuxième surfaces liées fournit une rupture cohésive de composition élastomère thermoplastique à plus de 25 °C, dans lequel une rupture cohésive d'élastomère thermoplastique résulte en ce qu'au moins 80 % de l'aire de surface de liaison sans adhésif de la deuxième surface de liaison possède une composition élastomère thermoplastique provenant de la première surface de liaison adhérant à celle-ci.

16. Composite moulé par injection selon la revendication 15, dans lequel la deuxième force de liaison entre les première et deuxième surfaces fournit une rupture cohésive de composition élastomère thermoplastique à plus de 75 °C.
